# EUROPÄISCHE PATENTSCHRIFT

(11) **EP 4 452 709 B1**
(45) Veröffentlichungstag und Bekanntmachung des Hinweises auf die Patenterteilung: **08.10.2025**
(21) Anmeldenummer: 22822607.2
(22) Anmeldetag: 05.12.2022
(51) Int. Cl.: B60T 13/74, B60T 13/66, B60T 17/18

(54) **HYDRAULISCHES BREMSSYSTEM SOWIE VERFAHREN ZUM BETREIBEN EINES BREMSSYSTEMS**
HYDRAULIC BRAKE SYSTEM AND METHOD FOR OPERATING A BRAKE SYSTEM
SYSTÈME DE FREINAGE HYDRAULIQUE ET PROCÉDÉ POUR FAIRE FONCTIONNER UN SYSTÈME DE FREINAGE

(30) Priorität: 23.12.2021 DE 102021215002
(43) Veröffentlichungstag der Anmeldung: 30.10.2024
(73) Patentinhaber: Robert Bosch GmbH, 70442 Stuttgart (DE)
(72) Erfinder: VOLLERT, Herbert, 71665 Vaihingen/Enz (DE); NAGEL, Willi, 71686 Remseck/Hochdorf (DE); MARQUART, Martin, 78564 Reichenbach (DE)
(86) Internationale Anmeldenummer: PCT/EP2022/084386
(87) Internationale Veröffentlichungsnummer: WO 2023/117388

(56) Entgegenhaltungen:
- DE-A1- 102011 114 804
- DE-A1- 102012 204 263
- DE-A1- 102012 205 861
- US-A1- 2019 168 724

## Beschreibung

Die vorliegende Erfindung betrifft ein hydraulisches Bremssystem sowie ein Verfahren zum Betreiben eines hydraulischen Bremssystems.

### Stand der Technik

Fahrzeuge, insbesondere Kraftfahrzeuge, verfügen in der Regel über eine Bremsanlage, welche in der Lage ist, ein sich bewegendes Fahrzeug sicher bis zum Stillstand abzubremsen. Hierzu sind insbesondere hydraulische Bremssysteme bekannt. Beim Betätigen der Bremse kann ein Benutzer durch einen Bremskraftverstärker, beispielsweise einen Vakuumbremskraftverstärker oder einen elektromechanischen Bremskraftverstärker unterstützt werden. Darüber hinaus sind Assistenzsysteme wie beispielsweise ein Antiblockiersystem (ABS) oder ein elektronisches Stabilitätsprogramm (ESP) bekannt, welche aktiv das Bremsverhalten eines Fahrzeugs beeinflussen können.

Die Druckschrift DE 10 2012 205 861 A1 beschreibt beispielsweise ein hydraulisches Bremssystem mit einem Hauptbremszylinder, zwei Bremsdruckerzeugern, mindestens einem Radbremszylinder sowie Unterbrechungsmitteln für eine redundante Bremsdruckerzeugung und -regelung mit elektrischer Unterstützung.

Die DE 10 2011 114 804 A1 offenbart eine Bremsanlage für ein Fahrzeug.

### Offenbarung der Erfindung

Die vorliegende Erfindung schafft ein hydraulisches Bremssystem für ein Fahrzeug, ein Kraftfahrzeug mit einem solchen hydraulischen Bremssystem sowie ein Verfahren zum Betreiben eines Bremssystems mit den Merkmalen der unabhängigen Patentansprüche. Weitere vorteilhafte Ausführungsformen sind Gegenstand der abhängigen Patentansprüche.

Demgemäß ist vorgesehen:
Ein hydraulisches Bremssystem für ein Fahrzeug mit einer Druckaufbaueinrichtung und einer Fahrdynamikregelung. Die Druckaufbaueinrichtung umfasst eine Eingangsschnittstelle, einen Hauptbremszylinder und einen elektromechanischen Antrieb. Die Eingangsschnittstelle der Druckaufbaueinrichtung ist dazu ausgelegt, eine elektronische Sollwertvorgabe von einem externen Sollwertgeber zu empfangen. Der Hauptbremszylinder ist dazu ausgelegt, hydraulischen Druck in mindestens zwei unabhängigen Bremskreise aufzubauen. Der elektromechanische Antrieb ist dazu ausgelegt, den Hauptbremszylinder zu betätigen. Insbesondere ist der elektromechanische Antrieb dazu ausgelegt, den Hauptbremszylinder unter Verwendung der durch die Eingangsschnittstelle empfangenen Sollwertvorgabe zu betätigen. Hierbei ist der Hauptbremszylinder ausschließlich durch den elektromechanischen Antrieb betätigbar. Mit anderen Worten, es ist kein Betätigungselement vorgesehen, durch welches der Hauptbremszylinder von einem externen mechanischen Betätigungselement, beispielsweise einem Bremspedal über eine mechanische Verbindung betätigt werden kann. Die Fahrdynamikregelung umfasst eine Bremsdruckerzeugungseinrichtung. Die Bremsdruckerzeugungseinrichtung ist dazu ausgelegt, hydraulischen Druck in den mindestens zwei unabhängigen Bremskreisen aufzubauen. Entsprechend kann somit der hydraulische Druck in den zwei unabhängigen Bremskreisen einerseits durch den Hauptbremszylinder und andererseits durch die Bremsdruckerzeugungseinrichtung aufgebaut werden.

### Weiterhin ist vorgesehen:

Ein Kraftfahrzeug mit einem erfindungsgemäßen hydraulischen Bremssystem.

### Schließlich ist vorgesehen:

Ein Verfahren zum Betreiben eines Bremssystems, insbesondere eines erfindungsgemäßen hydraulischen Bremssystems, mit einem Schritt zum Empfangen einer elektronischen Sollwertvorgabe an der Eingangsschnittstelle der Druckaufbaueinrichtung und einem Schritt zum Ansteuern des elektromechanischen Antriebs gemäß der empfangenen Sollwertvorgabe.

### Vorteile der Erfindung

Der vorliegenden Erfindung liegt die Erkenntnis zugrunde, dass konventionelle Bremssysteme, insbesondere hydraulische Bremssysteme in der Regel über eine mechanische Verbindung von einem externen mechanischen Betätigungselement angesteuert werden. Beispielsweise kann es sich bei diesem externen Betätigungselement um das Bremspedal eines Kraftfahrzeugs handeln, welches über eine mechanische Verbindung mit dem Hauptbremszylinder einer Bremsanlage gekoppelt ist. Gegebenenfalls kann diese Ansteuerung durch einen Bremskraftverstärker unterstützt werden. In allen Fällen wird jedoch eine externe mechanische Kraft, beispielsweise von dem Bremspedal, an den Hauptbremszylinder weitergegeben.

Es ist nun eine Idee der vorliegenden Erfindung, die mechanische Kraftübertragung, beispielsweise von einem Bremspedal zu dem Hauptbremszylinder, durch eine elektronische Signalübertragung und ein elektromechanisches Betätigungselement am Hauptbremszylinder zu ersetzen. Auf diese Weise können aufwändige, komplexe und gegebenenfalls fehleranfällige mechanische Kraftübertragungen von einem Bremspedal zu dem Hauptbremszylinder vermieden und durch eine einfache und flexible elektronische Signalübertragung ersetzt werden.

Durch die Verwendung zweier unabhängiger Komponenten zur Bereitstellung des hydraulischen Drucks in den Bremskreisen kann gewährleistet werden, dass auch beim Ausfall einer Komponente für den Aufbau des hydraulischen Drucks dennoch in den Bremskreisen ein ausreichender hydraulischer Druck zum Betätigen der Bremsanlage aufgebaut werden kann. Das hydraulische Bremssystem der vorliegenden Erfindung umfasst somit einerseits mehrere unabhängige hydraulische Bremskreise, sodass bei einem Defekt eines hydraulischen Bremskreises der oder die übrigen hydraulischen Bremskreise noch ein Abbremsen des Fahrzeugs ermöglichen. Darüber hinaus ist durch die Verwendung von zwei unabhängigen Komponenten, die jeweils in der Lage sind, einen hydraulischen Druck in den Bremskreisen aufzubauen, gewährleistet, dass auch beim Ausfall einer Komponente zum Aufbau des hydraulischen Drucks durch die jeweils andere Komponente noch ein ausreichender hydraulischer Druck zum Abbremsen des Fahrzeugs aufgebaut werden kann. Auf diese Weise kann somit ein hydraulisches Bremssystem realisiert werden, welches die erforderliche Redundanz und somit Sicherheit in der Bremsanlage gewährleistet. Hierbei ist ausdrücklich keine mechanische Verbindung zwischen einem Betätigungselement eines Benutzers, beispielsweise einem Bremspedal, und dem Bremssystem erforderlich. Mit anderen Worten, die Sollwertvorgabe für den Aufbau des hydraulischen Drucks in dem Bremssystem erfolgt ausschließlich durch das Bereitstellen von elektronischen Signalen.

Das elektronische Signal zur Übertragung der Sollwertvorgabe an das Bremssystem kann hierbei auf beliebige Weise erzeugt, übertragen und an dem Bremssystem bereitgestellt werden. Zum Beispiel kann das Signal als digitales Signal über einen geeigneten Kommunikationsbus, beispielsweise einen CAN-Bus oder Ähnliches übertragen werden. Darüber hinaus kann das elektronische Signal auch in Form eines Spannungs- oder Stromsignals bereitgestellt werden. Grundsätzlich ist es auch beispielsweise möglich, das Signal als optisches Signal bereitzustellen und an der Eingangsschnittstelle des Bremssystems mittels eines entsprechenden Konverters in ein elektronisches Signal umzuwandeln.

Das Signal für die Sollwertvorgabe kann von einem Sollwertgeber, beispielsweise einem Sensor an einem Bremspedal oder Ähnlichem, bereitgestellt werden. Auf diese Weise kann ein Benutzer mittels einer geeigneten Eingabevorrichtung, zum Beispiel dem Bremspedal, einen Sollwert vorgeben, der über eine Kommunikationsverbindung als elektronisches Signal an dem Bremssystem bereitgestellt wird. Daraufhin kann entsprechend der von dem Benutzer spezifizierten Sollwertvorgabe ein hydraulischer Druck in den Bremskreisen des Bremssystems aufgebaut werden.

Gemäß einer Ausführungsform umfasst die Fahrdynamikregelung ein elektronisches Stabilitätsprogramm (ESP). Entsprechend kann eine Komponente zum Aufbau hydraulischen Drucks in einem solchen ESP dazu genutzt werden, um beispielsweise bei einer Fehlfunktion der Druckaufbaueinrichtung mit dem Hauptbremszylinder dennoch einen hydraulischen Druck in den Bremskreisen des Bremssystems aufzubauen. Hierzu kann gegebenenfalls auch die Sollwertvorgabe an der Fahrdynamikregelung bereitgestellt werden, um bei einem Defekt in der Druckaufbaueinrichtung durch die Fahrdynamikregelung den gewünschten hydraulischen Druck aufzubauen.

Gemäß einer Ausführungsform ist die Bremsdruckerzeugungseinrichtung der Fahrdynamikregelung dazu ausgelegt, in den mindestens zwei unabhängigen Bremskreisen einen hydraulischen Druck aufzubauen, falls in der Druckaufbaueinrichtung eine Fehlfunktion detektiert worden ist. Entsprechend kann durch die Fahrdynamikregelung ein erforderlicher hydraulischer Druck zum Betätigen der Bremsanlage bereitgestellt werden, selbst wenn durch die Druckaufbaueinrichtung kein ausreichender hydraulischer Druck bereitgestellt werden kann. Somit wird durch die zwei unabhängig voneinander agierenden Komponenten, einerseits die Druckaufbaueinrichtung mit dem Hauptbremszylinder und andererseits die Fahrdynamikregelung mit der Bremsdruckerzeugungseinrichtung, ein redundantes System zum Aufbau von hydraulischem Druck in den Bremskreisen bereitgestellt.

Gemäß einer Ausführungsform umfasst das Bremssystem einen Sollwertgeber. Der Sollwertgeber ist dazu ausgelegt, eine zu einer Benutzereingabe korrespondierende elektronische Sollwertvorgabe an der Eingangsschnittstelle der Druckaufbaueinrichtung bereitzustellen. Beispielsweise kann der Sollwertgeber eine zu einer Stellung eines Bremspedals korrespondierende Größe bereitstellen. Diese Größe kann als analoges oder digitales Signal als Sollwertvorgabe an der Druckaufbaueinrichtung bereitgestellt werden. Ergänzend zu dem Sollwertgeber, welcher eine Stellung eines Bremspedals erfassen und ein hierzu korrespondierendes Ausgangssignal bereitstellen kann, kann an dem Bremspedal zusätzlich eine Rückmeldeeinrichtung vorgesehen sein. Eine solche Rückmeldeeinrichtung kann beispielsweise an dem Bremspedal eine haptische Rückmeldung in Form einer Kraft, Vibration oder Ähnlichem bereitstellen. Auf diese Weise kann einem Benutzer eine Rückmeldung über das Bremsverhalten gegeben werden.

Gemäß einer Ausführungsform ist der Sollwertgeber mechanisch mit einem Bremspedal des Fahrzeugs gekoppelt. Ferner ist der Sollwertgeber elektrisch oder optisch mit der Eingangsschnittstelle der Druckaufbaueinrichtung gekoppelt. Auf diese Weise kann die von dem Benutzer durch das Betätigen des Bremspedals spezifizierte Größe als elektrisches oder optisches Signal an der Eingangsschnittstelle des Bremssystems bereitgestellt werden. Somit kann eine mechanische Kopplung des Bremspedals mit dem Bremssystem vollständig entfallen.

Gemäß einer Ausführungsform kann der durch den Sollwertgeber spezifizierte Sollwert als digitales Datensignal an der Eingangsschnittstelle des Bremssystems bereitgestellt werden. Beispielsweise kann die von dem Sollwertgeber erfasste Größe über einen Datenbus, beispielsweise einen CAN-Bus oder Ähnliches an die Eingangsschnittstelle des Bremssystems übertragen werden.

Gemäß einer Ausführungsform ist die Druckaufbaueinrichtung dazu ausgelegt, von einem ersten Energieversorgungsnetz gespeist zu werden. Ferner ist die Fahrdynamikregelung dazu ausgelegt, von einem zweiten Energieversorgungsnetz gespeist zu werden. Mit anderen Worten, Druckaufbaueinrichtung und Fahrdynamikregelung werden von zwei getrennten, insbesondere von zwei unabhängigen Energieversorgungsnetzen bzw. Energiequellen gespeist. Auf diese Weise kann gewährleistet werden, dass selbst beim Ausfall eines der beiden Energieversorgungsnetze ein ausreichender hydraulischer Druck zum Betätigen der Bremsanlage bereitgestellt werden kann.

### Kurze Beschreibung der Zeichnungen

Weitere Merkmale und Vorteile der Erfindung werden nachfolgend anhand der Figuren erläutert. Dabei zeigen:
- Fig. 1:: eine schematische Darstellung eines Blockschaubilds eines hydraulischen Bremssystems gemäß einer Ausführungsform;
- Fig. 2:: eine schematische Darstellung eines Blockschaubilds eines hydraulischen Bremssystems gemäß einer weiteren Ausführungsform; und
- Fig. 3:: ein Ablaufdiagramm, wie es einem Verfahren zum Betreiben eines Bremssystems gemäß einer Ausführungsform zugrunde liegt.

In den Figuren bezeichnen dieselben Bezugszeichen gleiche oder funktionsgleiche Komponenten, soweit nichts Gegenteiliges angegeben ist.

### Beschreibung von Ausführungsformen

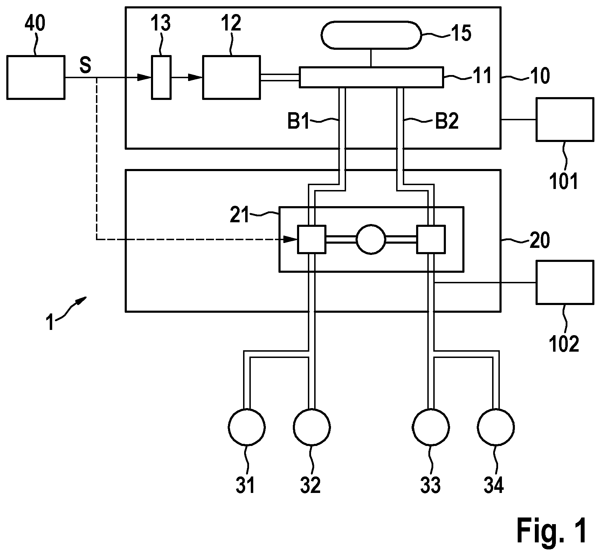

Figur 1 zeigt eine schematische Darstellung eines Blockschaubilds zur Veranschaulichung des Grundprinzips eines hydraulischen Bremssystems 1 für ein Fahrzeug gemäß einer Ausführungsform. Das hier dargestellte Bremssystem umfasst eine Druckaufbaueinrichtung 10 und eine Fahrdynamikregelung 20. Die Druckaufbaueinrichtung 10 umfasst einen Hauptbremszylinder 11. Dieser Hauptbremszylinder 11 kann mehrere Kammern 11a, 11b aufweisen, wobei jede Kammer 11a, 11b mit einem separaten, unabhängigen Bremskreis B1, B2 verbunden ist. Auf diese Weise kann durch den Hauptbremszylinder 11 in den mehreren unabhängigen Bremskreisen B1, B2 durch das Betätigen des Hauptbremszylinders ein hydraulischer Druck aufgebaut werden. Die mehreren Bremskreise B1, B2 sind hierbei nicht miteinander verbunden. Somit handelt es sich bei den mehreren Bremskreisen B1, B2 um unabhängige Bremskreise. Bei einem Fehlerfall, beispielsweise aufgrund einer Undichtigkeit, in einem der Bremskreise B1, B2 kann daher in den übrigen Bremskreisen B1, B2 weiterhin hydraulischer Druck aufgebaut werden.

Zum Betätigen des Hauptbremszylinders 11 ist ein elektromechanischer Antrieb 12 vorgesehen. Insbesondere ist es vorgesehen, dass der Hauptbremszylinder 11 ausschließlich durch diesen elektromechanischen Antrieb 12 betätigt wird. Mit anderen Worten, es ist keine mechanische Kopplung des Hauptbremszylinders mit einem mechanischen Betätigungselement, wie zum Beispiel einem Bremspedal oder Ähnlichem, vorgesehen.

Bei dem elektromechanischen Antrieb 12 kann es sich grundsätzlich um einen beliebigen, geeigneten elektromechanischen Antrieb, wie beispielsweise einen Elektromotor mit einem Getriebe handeln. Insbesondere kann der elektromechanische Antrieb derart angesteuert werden, dass gemäß einer mittels einer Eingangsschnittstelle 13 empfangenden Sollwertvorgabe durch das Betätigen des Hauptbremszylinders 11 in den Bremskreisen B1 und B2 ein entsprechender hydraulischer Druck aufgebaut wird. Beispielsweise kann zum Betätigen des Hauptbremszylinders 11 ein elektromechanischer Antrieb 12 eingesetzt werden, wie er in gleicher oder ähnlicher Weise auch für elektromechanische Bremskraftverstärker von konventionellen Bremssystemen eingesetzt wird. Erfindungsgemäß entfällt dabei jedoch die konventionelle mechanische Betätigung durch Weiterleiten einer Kraft von dem Bremspedal zu dem Hauptbremszylinder. Vielmehr wird der Hauptbremszylinder ausschließlich durch den elektromechanischen Antrieb 12 gemäß der empfangenen Sollwertvorgabe S betätigt.

Die Sollwertvorgabe S kann als analoges oder digitales Signal von der Eingangsschnittstelle 13 empfangen werden. Beispielsweise kann eine zu einer Sollwertvorgabe korrespondierende elektrische Spannung oder ein korrespondierender elektrischer Strom an der Eingangsschnittstelle 13 bereitgestellt werden. Darüber hinaus ist es jedoch auch möglich, beispielsweise ein digitales Signal, beispielsweise ein pulsbreitenmoduliertes Signal an der Eingangsschnittstelle 13 bereitzustellen. Ferner kann die Sollwertvorgabe S auch als digitale Information über eine Kommunikationsverbindung, beispielsweise einen Datenbus, wie zum Beispiel einen CAN-Bus oder Ähnliches, an der Eingangsschnittstelle 13 bereitgestellt werden. Insbesondere kann die Sollwertvorgabe S als analoges oder digitales elektrisches Signal an der Eingangsschnittstelle 13 bereitgestellt werden. Darüber hinaus ist es jedoch beispielsweise auch möglich, die Sollwertvorgabe als optisches Signal zu übertragen und mittels eines geeigneten Konverters an der Eingangsschnittstelle 13 das optische Signal in ein elektrisches Signal zu konvertieren und zur Weiterverarbeitung bereitzustellen.

Die Sollwertvorgabe S kann beispielsweise von einem Sollwertgeber 40 bereitgestellt werden. Bei diesem Sollwertgeber 40 kann es sich beispielsweise um einen Sensor handeln, welcher ein Ausgangssignal bereitstellt, das zu einer Stellung eines Bremspedals oder einer auf das Bremspedal ausgeübten Kraft korrespondiert. Hierzu kann der Sollwertgeber beispielsweise mechanisch mit dem Bremspedal gekoppelt sein. Ferner kann der Sollwertgeber über eine Kommunikationsverbindung, beispielsweise eine elektrische oder optische Verbindung mit der Eingangsschnittstelle 13 verbunden sein. Auf diese Weise kann an der Eingangsschnittstelle 13 der Druckaufbaueinrichtung 10 ein Signal bereitgestellt werden, welches zu der Stellung des Bremspedals korrespondiert. Darüber hinaus können an dem Bremspedal gegebenenfalls zusätzliche Komponenten vorgesehen sein, welche an dem Bremspedal eine Rückmeldung, beispielsweise in Form eines Widerstandes oder einer Vibration erzeugen. Hierdurch kann einem Benutzer eine haptische Rückmeldung über das Bremsverhalten des Bremssystems gegeben werden. Auf diese Weise kann einem Benutzer an dem Bremspedal ein Verhalten simuliert werden, welches einem Verhalten bei einer direkten mechanischen Kopplung zwischen Bremspedal und Hauptbremszylinder entspricht.

Die Druckaufbaueinrichtung 10 kann somit unter Verwendung des von dem Sollwertgeber 40 bereitgestellten Sollwertes und entsprechender Ansteuerung des elektromechanischen Antriebs 12 den Hauptbremszylinder 11 betätigen. Hierdurch wird in den beiden unabhängigen Bremskreisen B1 und B2 jeweils ein hydraulischer Druck aufgebaut. Durch diesen hydraulischen Druck können beispielsweise die Bremselemente 31 bis 34 betätigt werden. Diese Bremselemente 31 bis 34 können beispielsweise Radbremszylinder an den Rädern eines Fahrzeugs umfassen.

Das Bremssystem 1 umfasst neben der Druckaufbaueinrichtung 10 ferner eine Fahrdynamikregelung 20. Bei dieser Fahrdynamikregelung 20 kann es sich beispielsweise um die Komponenten eines elektronischen Stabilitätsprogramms (ESP) handeln. Insbesondere umfasst die Fahrdynamikregelung 20 eine Bremsdruckerzeugungseinrichtung 21. Diese Bremsdruckerzeugungseinrichtung 21 ist dazu ausgelegt, hydraulischen Druck in den unabhängigen Bremskreisen B1 und B2 zu erzeugen. Beispielsweise kann die Bremsdruckerzeugungseinrichtung 21 für jeden Bremskreis B1 und B2 eine Hydraulikpumpe umfassen, welche den hydraulischen Druck in den Bremskreisen B1 und B2 aufbauen kann. Insbesondere kann es sich bei der Bremsdruckerzeugungseinrichtung 21 um eine elektrisch betriebene Bremsdruckerzeugungseinrichtung handeln.

Durch ein solches Bremssystem 1 mit einer Druckaufbaueinrichtung 10 und ferner einer Fahrdynamikregelung 20 mit einer weiteren Bremsdruckerzeugungseinrichtung 21 sind zwei voneinander unabhängige Komponenten zum Aufbau des hydraulischen Drucks in den unabhängigen Bremskreisen B1 und B2 vorgesehen. Somit ist eine ausreichende Redundanz gegeben, um auch beim Ausfall einer der Komponenten durch die jeweils andere Komponente den für das Bremsen erforderlichen hydraulischen Druck in den Bremskreisen B1 und B2 aufzubauen.

Die Druckaufbaueinrichtung 10 mit der Eingangsschnittstelle 13, dem elektromechanischen Antrieb 12 und dem Hauptbremszylinder 11 kann beispielsweise von einem ersten Energieversorgungsnetz 101 mit elektrischer Energie versorgt werden. Die Fahrdynamikregelung 20 mit der Bremsdruckerzeugungseinrichtung 21 kann von einem weiteren Energieversorgungsnetz 102 mit elektrischer Energie versorgt werden. Insbesondere können das erste Energieversorgungsnetz 101 und das zweite Energieversorgungsnetz 102 voneinander unabhängig sein. Beispielsweise kann in dem ersten Energieversorgungsnetz 101 ein erster elektrischer Energiespeicher vorgesehen sein, und in dem zweiten Energieversorgungsnetz 102 kann ein zweiter elektrischer Energiespeicher vorgesehen sein. Somit ist auch für die elektrischen Energieversorgungsnetze des Bremssystems 1 beim Ausfall eines der beiden Energieversorgungsnetze 101 oder 102 eine redundante Energieversorgung vorhanden, um durch das jeweils verbleibende Energieversorgungsnetz 101 oder 102 die daran angeschlossenen Komponenten mit elektrischer Energie zu versorgen und somit einen hydraulischen Druck für das Abbremsen des Fahrzeugs bereitstellen zu können. Beispielsweise kann es sich bei dem ersten Energieversorgungsnetz 101 und dem zweiten Energieversorgungsnetz 102 um zwei voneinander unabhängige Niedervolt-Gleichspannungsnetze eines Kraftfahrzeuges handeln. Gegebenenfalls können die beiden Energieversorgungsnetze 101 und 102 mittels eines Gleichspannungswandlers miteinander gekoppelt werden. Hierdurch kann ein Energieaustausch zum Aufladen der elektrischen Energiespeicher in den Energieversorgungsnetzen 101 und 102 realisiert werden. Darüber hinaus kann insbesondere bei ganz oder zumindest teilweise elektrisch angetriebenen Fahrzeugen beispielsweise auch die Druckaufbaueinrichtung 10 direkt von einer Traktionsbatterie eines solchen Elektrofahrzeuges gespeist werden, während die Fahrdynamikregelung 20 von einem Niedervoltnetz mit elektrischer Energie gespeist wird.

Um auch bei einer Fehlfunktion der Druckaufbaueinrichtung 10 kontrolliert einen hydraulischen Druck gemäß der Sollwertvorgabe S aufbauen zu können, kann die Sollwertvorgabe S auch zusätzlich an der Fahrdynamikregelung 20 und insbesondere an der Bremsdruckerzeugungseinrichtung 21 bereitgestellt werden. In diesem Fall kann bei einer Detektion einer Fehlfunktion der Druckaufbaueinrichtung 10 durch die Bremsdruckerzeugungseinrichtung 21 der Fahrdynamikregelung 20 in den Bremskreisen B1 und B2 ein Bremsdruck aufgebaut werden, der der Sollwertvorgabe S entspricht.

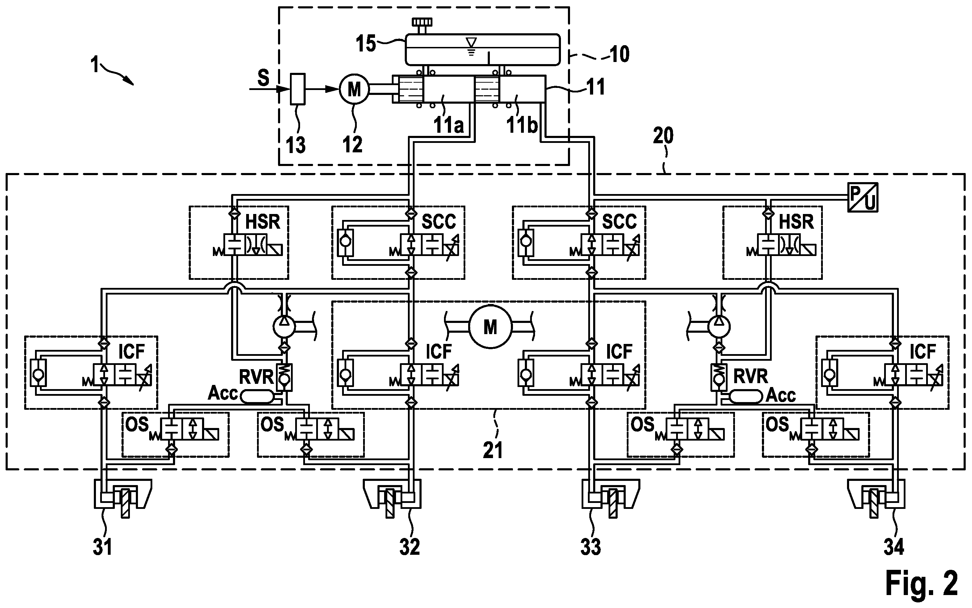

Figur 2 zeigt eine schematische Darstellung eines Blockschaubildes eines Bremssystems 1 gemäß einer Ausführungsform. Hierbei gelten auch für das Bremssystem 1 gemäß Figur 2 die bereits zuvor in Zusammenhang mit Figur 1 gemachten Ausführungen. Darüber hinaus sind in Figur 2 die einzelnen Komponenten der Druckaufbaueinrichtung 10 und der Fahrdynamikregelung 20 in detaillierterer Weise dargestellt.

Wie beispielsweise in Figur 2 zu erkennen ist, können die einzelnen Kammern 11a und 11b des Hauptbremszylinders 11 von einem Reservoir 15 gespeist werden. Im Ruhezustand, das heißt bei nicht betätigtem Hauptbremszylinder 11 ist dabei ein direkter Fluss der Bremsflüssigkeit von dem Reservoir 15 durch die Kammern 11a und 11b des Hauptbremszylinders 11 in die Bremskreise B1 und B2 möglich. Vorzugsweise ist im Hauptbremszylinder 11 eine Vorrichtung vorgesehen, welche den Kolben des Hauptbremszylinders 11 im Ruhezustand in eine Position fährt, in welcher ein solcher ungehinderter Fluss der Bremsflüssigkeit von dem Reservoir 15 in die beiden unabhängigen Bremskreise B1 und B2 ermöglicht wird. Dies kann beispielsweise mittels Federkraft oder Ähnlichem realisiert werden. Auf diese Weise kann gewährleistet werden, dass bei einer Fehlfunktion oder einem Ausfall des elektromechanischen Antriebs 12 die Bremsflüssigkeit von dem Reservoir 15 in die Bremskreise B1 und B2 fließen kann und somit durch die Bremsdruckerzeugungseinrichtung 21 der Fahrdynamikregelung 20 ein ausreichender hydraulischer Druck aufgebaut werden kann. Darüber kann der Hauptbremszylinder 11 auch derart konfiguriert sein, dass auch bei einem angesteuerten Hauptbremszylinder 11 ein Fluss von Hydraulikflüssigkeit aus dem Reservoir 15 in Richtung der Fahrdynamikregelung 20 und insbesondere der Bremsdruckerzeugungseinrichtung 21 möglich ist.

Wie zuvor bereits kurz angeführt, kann es sich bei der Fahrdynamikregelung 20 um ein elektronisches Stabilitätsprogramm (ESP) oder Ähnliches handeln. Die einzelnen Komponenten eines solchen ESP sind schematisch in Figur 2 dargestellt. Soweit diese nicht Gegenstand der vorliegenden Erfindung sind, werden diese jedoch hier nicht näher erläutert.

Die Fahrdynamikregelung 20 und insbesondere das ESP umfassen neben weiteren Komponenten eine Bremsdruckerzeugungseinrichtung 21. Beispielsweise kann es sich hierbei um eine Hydraulikpumpe handeln, welche mittels eines Elektromotors einen hydraulischen Druck zum Betätigen der Bremselemente 31 bis 34 erzeugen kann. Insbesondere kann die Bremsdruckerzeugungseinrichtung 21 der Fahrdynamikregelung 20 in jedem der unabhängigen Bremskreise B1 und B2 einen hydraulischen Druck erzeugen. Hierzu können in den einzelnen Bremskreisen B1 und B2 voneinander unabhängige Komponenten zum Erzeugen des hydraulischen Drucks vorgesehen sein. Alternativ ist es auch möglich, dass, wie in Figur 2 dargestellt, die Pumpenkomponenten für den Aufbau des hydraulischen Drucks von einem gemeinsamen elektrischen Antrieb angesteuert werden.

Bei den Komponenten für die Bremsdruckerzeugungseinrichtung 21 der Fahrdynamikregelung 20 kann es sich grundsätzlich um Komponenten handeln, wie sie auch in konventionellen Fahrdynamikregelungen, insbesondere ESP eingesetzt werden. Darüber hinaus können gegebenenfalls die Komponenten für den Aufbau des hydraulischen Drucks zur Steigerung der Redundanz für ein vollständig elektronisch betätigtes Bremssystem auch entsprechend angepasst dimensioniert werden.

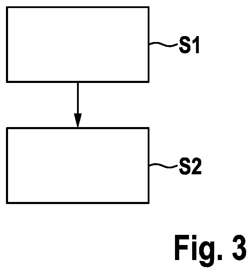

Figur 3 zeigt ein Ablaufdiagramm, wie es einem Verfahren zum Betreiben eines hydraulischen Bremssystems gemäß einer Ausführungsform zugrunde liegt. Bei dem hierbei betriebenen Bremssystem 1 kann es sich insbesondere um eines der zuvor beschriebenen hydraulischen Bremssysteme 1 handeln.

In Schritt S1 wird eine elektronische Sollwertvorgabe an der Eingangsschnittstelle 13 der Druckaufbaueinrichtung 10 empfangen.

Daraufhin kann in Schritt S2 der elektromechanische Antrieb 12 gemäß einer empfangenen Sollwertvorgabe S angesteuert werden.

Sollte es aufgrund eines Defekts oder einer Fehlfunktion nicht möglich sein, durch die Druckaufbaueinrichtung 10 den erforderlichen hydraulischen Druck zum Betätigen der Bremsanlage bereitzustellen, so kann durch die Bremsdruckerzeugungseinrichtung 21 der Fahrdynamikregelung 20 alternativ der hydraulische Druck aufgebaut werden. Auf diese Weise ist eine ausreichende Redundanz für einen sicheren Betrieb des hydraulischen Bremssystems in einem Fahrzeug gegeben.

Zusammenfassend betrifft die vorliegende Erfindung ein hydraulisches Bremssystem, insbesondere ein hydraulisches Bremssystem für ein Kraftfahrzeug. Hierbei erfolgt die Ansteuerung eines Hauptbremszylinders zum Aufbau des hydraulischen Drucks ausschließlich durch einen elektrischen Antrieb. Die Sollwertvorgabe zum Ansteuern des elektromechanischen Antriebs kann als elektrisches Signal empfangen werden. Durch die Nutzung einer Bremsdruckerzeugungseinrichtung einer Fahrdynamikregelung kann im Fehlerfall eine redundante Bremsdruckerzeugung gewährleistet werden.

## Patentansprüche

1. Hydraulisches Bremssystem (1) für ein, Fahrzeug, mit:
einer Druckaufbaueinrichtung (10) und einer Fahrdynamikregelung (20),
wobei die Druckaufbaueinrichtung (10), umfasst:
eine Eingangsschnittstelle (13), die dazu ausgelegt ist, eine elektronische Sollwertvorgabe (S) von einem externen Sollwertgeber (40) zu empfangen,
einen Hauptbremszylinder (11), der dazu ausgelegt ist, hydraulischen Druck in mindestens zwei unabhängige Bremskreise (B1, B2) aufzubauen, und
einen elektromechanischen Antrieb (12), der dazu ausgelegt ist, unter Verwendung der durch die Eingangsschnittstelle (13) empfangenen Sollwertvorgabe (S) den Hauptbremszylinder (11) zu betätigen,
wobei der Hauptbremszylinder (11) ausschließlich durch den elektromechanischen Antrieb (12) betätigbar ist;
**dadurch gekennzeichnet, dass** die Fahrdynamikregelung (20) eine Bremsdruckerzeugungseinrichtung (21) umfasst, die dazu ausgelegt ist, hydraulischen Druck in den mindestens zwei unabhängigen Bremskreisen (B1, B2) aufzubauen.

2. Bremssystem (1) nach Anspruch 1, wobei die Fahrdynamikregelung (20) ein elektronisches Stabilitätsprogramm umfasst.

3. Bremssystem (1) nach Anspruch 1 oder 2, wobei die Bremsdruckerzeugungseinrichtung (21) der Fahrdynamikregelung (20) dazu ausgelegt ist, in den mindestens zwei unabhängigen Bremskreisen (B1, B2) einen hydraulischen Druck aufzubauen, falls in der Druckaufbaueinrichtung (10) eine Fehlfunktion detektiert worden ist.

4. Bremssystem (1) nach einem der Ansprüche 1 bis 3, mit einem Sollwertgeber (40), der dazu ausgelegt ist, eine zu einer Benutzereingabe korrespondierende elektronische Sollwertvorgabe (S) an der Eingangsschnittstelle (13) der Druckaufbaueinrichtung (20) bereitzustellen.

5. Bremssystem (1) nach Anspruch 4, wobei der Sollwertgeber (40) mechanisch mit einem Bremspedal des Fahrzeugs gekoppelt ist, und
wobei der Sollwertgeber (40) elektrisch mit der Eingangsschnittstelle (13) der Druckaufbaueinrichtung (10) gekoppelt ist.

6. Bremssystem (1) nach Anspruch 4 oder 5, wobei der Sollwertgeber (40) mit der Eingangsschnittstelle (13) der Druckaufbaueinrichtung (10) über eine digitale Kommunikationsschnittstelle gekoppelt ist.

7. Bremssystem (1) nach einem der Ansprüche 1 bis 6, wobei die Druckaufbaueinrichtung (10) dazu ausgelegt ist, von einem ersten Energieversorgungsnetz (101) gespeist zu werden, und
wobei die Fahrdynamikregelung (20) dazu ausgelegt ist, von einem zweiten Energieversorgungsnetz (102) gespeist zu werden.

8. Kraftfahrzeug mit einem hydraulischen Bremssystem (1) nach einem der Ansprüche 1 bis 7.

9. Verfahren zum Betreiben eines Bremssystems (1) nach einem der Ansprüche 1 bis 7, **dadurch gekennzeichnet, dass** das Verfahren die Schritte aufweist:
Empfangen (S1) einer elektronischen Sollwertvorgabe (S) an der Eingangsschnittstelle (13) der Druckaufbaueinrichtung (10); und
Ansteuern (S2) des elektromechanischen Antriebs (12) gemäß der empfangenen Sollwertvorgabe (S).

10. Verfahren nach Anspruch 9, mit einem Schritt zum Aufbauen eines hydraulischen Drucks in mindestens einem der Bremskreise (B1, B2) mittels der Bremsdruckerzeugungseinrichtung (21) der Fahrdynamikregelung (20), falls in der der Druckaufbaueinrichtung (10) eine Fehlfunktion detektiert worden ist.

## Claims

1. Hydraulic brake system (1) for a vehicle, comprising:
a pressure build-up device (10) and a vehicle dynamics control system (20),
wherein the pressure build-up device (10) comprises:
an input interface (13), which is designed to receive an electronic setpoint value specification (S) from an external setpoint value generator (40), a master brake cylinder (11), which is designed to build up hydraulic pressure in at least two independent brake circuits (B1, B2), and an electromechanical drive (12), which is designed to actuate the master brake cylinder (11) using the setpoint value specification (S) received by the input interface (13),
wherein the master brake cylinder (11) can be actuated only by the electromechanical drive (12);
**characterized in that** the vehicle dynamics control system (20) comprises a brake pressure generating device (21), which is designed to build up hydraulic pressure in the at least two independent brake circuits (B1, B2).

2. Brake system (1) according to Claim 1, wherein the vehicle dynamics control system (20) comprises an electronic stability program.

3. Brake system (1) according to Claim 1 or 2, wherein the brake pressure generating device (21) of the vehicle dynamics control system (20) is designed to build up a hydraulic pressure in the at least two independent brake circuits (B1, B2) if a malfunction has been detected in the pressure build-up device (10).

4. Brake system (1) according to any of Claims 1 to 3, comprising a setpoint value generator (40), which is designed to provide an electronic setpoint value specification (S), which corresponds to a user input, at the input interface (13) of the pressure build-up device (20).

5. Brake system (1) according to Claim 4, wherein the setpoint value generator (40) is mechanically coupled to a brake pedal of the vehicle, and
wherein the setpoint value generator (40) is electrically coupled to the input interface (13) of the pressure build-up device (10).

6. Brake system (1) according to Claim 4 or 5, wherein the setpoint value generator (40) is coupled to the input interface (13) of the pressure build-up device (10) via a digital communication interface.

7. Brake system (1) according to any of Claims 1 to 6, wherein the pressure build-up device (10) is designed to be fed by a first power supply system (101), and
wherein the vehicle dynamics control system (20) is designed to be fed by a second power supply system (102).

8. Motor vehicle having a hydraulic brake system (1) according to any of Claims 1 to 7.

9. Method for operating a brake system (1) according to any of Claims 1 to 7, **characterized in that** the method comprises the steps of:
receiving (S1) an electronic setpoint value specification (S) at the input interface (13) of the pressure build-up device (10); and
controlling (S2) the electromechanical drive (12) in accordance with the received setpoint value specification (S).

10. Method according to Claim 9, comprising a step for building up a hydraulic pressure in at least one of the brake circuits (B1, B2) by means of the brake pressure generating device (21) of the vehicle dynamics control system (20) if a malfunction has been detected in the pressure build-up device (10).

## Revendications

1. Système de freinage (1) hydraulique, présentant :
un dispositif (10) d'augmentation pression et une régulation (20) de dynamique de conduite, le dispositif (10) d'augmentation de pression comprenant :
une interface d'entrée (13) qui est conçue pour recevoir une spécification (S) de valeur de consigne provenant d'un générateur externe (40) de valeur de consigne, un cylindre de freinage principal (11), qui est conçu pour augmenter une pression hydraulique dans au moins deux circuits de freinage (B1, B2) indépendants et un entraînement électromécanique (12) qui est conçu pour actionner le cylindre de freinage principal (11) à l'aide de de la spécification (S) de valeur de consigne reçue par l'interface d'entrée (13),
le cylindre de freinage principal (11) étant actionnable exclusivement par l'entraînement électromécanique (12) ;
**caractérisé en ce que** la régulation (20) de dynamique de conduite comprend un dispositif (21) de génération de pression de freinage conçu pour augmenter la pression hydraulique dans lesdits au moins deux circuits de freinage (B1, B2) indépendants.

2. Système de freinage (1) selon la revendication 1, la régulation (20) de dynamique de conduite comprenant un programme de stabilité électronique.

3. Système de freinage (1) selon la revendication 1 ou 2, le dispositif (21) de génération de pression de freinage de la régulation (20) de dynamique de conduite étant conçu pour augmenter la pression hydraulique dans lesdits au moins deux circuits de freinage (B1, B2) indépendants dans le cas où un dysfonctionnement a été détecté dans le dispositif (10) d'augmentation de pression.

4. Système de freinage (1) selon l'une des revendications 1 à 3, présentant un générateur (40) de valeur de consigne qui est conçu pour mettre à disposition une spécification (S) de valeur de consigne électronique correspondant à une entrée d'utilisateur au niveau de l'interface d'entrée (13) du dispositif (20) d'augmentation pression.

5. Système de freinage (1) selon la revendication 4, le générateur (40) de valeur de consigne étant accouplé mécaniquement à une pédale de freinage du véhicule et
le générateur (40) de valeur de consigne étant couplé électriquement à l'interface d'entrée (13) du dispositif (10) d'augmentation de pression.

6. Système de freinage (1) selon la revendication 4 ou 5, le générateur (40) de valeur de consigne étant couplé par l'intermédiaire d'une interface de communication numérique à l'interface d'entrée (13) du dispositif (10) d'augmentation pression.

7. Système de freinage (1) selon l'une des revendications 1 à 6, le dispositif (10) d'augmentation de pression étant conçu pour être alimenté par un premier réseau (101) d'alimentation en énergie et
la régulation (20) de dynamique de conduite étant conçue pour être alimentée par un deuxième réseau (102) d'alimentation en énergie.

8. Véhicule automobile présentant un système de freinage (1) hydraulique selon l'une des revendications 1 à 7.

9. Procédé de fonctionnement d'un système de freinage (1) selon l'une des revendications 1 à 7, **caractérisé en ce que** le procédé présente les étapes de :
réception (S1) d'une spécification (S) de valeur de consigne électronique au niveau de l'interface d'entrée (13) du dispositif 10) d'augmentation de pression ; et
commande (S2) de l'entraînement électromécanique (12) en fonction de la spécification (S) de valeur de consigne reçue.

10. Procédé selon la revendication 9, présentant une étape d'augmentation de la pression hydraulique dans au moins l'un des circuits de freinage (B1, B2) au moyen du dispositif (21) de génération de pression de freinage de la régulation (20) dynamique de conduite dans le cas où un dysfonctionnement a été détecté dans le dispositif (10) d'augmentation de pression.
